# EUROPÄISCHE PATENTANMELDUNG

(11) **EP 3 878 617 A1**
(43) Veröffentlichungstag der Anmeldung: **15.09.2021**
(21) Anmeldenummer: 20162980.5
(22) Anmeldetag: 13.03.2020
(51) Int. Cl.: B29B 17/00, B29C 48/00, B29C 48/07, B29C 48/305, B29B 13/00, B29B 13/10, B29B 17/04, B29C 48/275, B29C 48/385, B29C 48/39, B29C 48/69, B29C 48/88, B29B 17/02, B29K 705/02, B29K 105/26, B29K 505/02

(54) **VERFAHREN ZUR HERSTELLUNG EINER RECYCLAT-PLATTE AUS RESTABFALL**

(71) Anmelder: Recyplast Holding AG, 6300 Zug (CH)
(72) Erfinder: Dicken von Oetinger, Christoph, 8700 Küsnacht (ZH) (CH); Marti, Silvio, 8640 Rapperswil (SG) (CH)
(74) Vertreter: Durm Patentanwälte PartG mbB

(57) **Zusammenfassung**

Ein Verfahren zur Herstellung einer Recyclat-Platte aus Restabfall, der im Wesentlichen aus einem Verbund aus thermoplastischem Kunststoff und Aluminiumfolie besteht, umfasst die Schritte:
- Zerkleinern des Restabfalls zu Schnipseln;
- Agglomerieren der Restabfall-Schnipsel bei einer ersten Temperatur zu einem zusammenhängenden Materialstrang;
- Entgasen des Materialstrangs;
- Extrudieren des Materialstrangs bei einer zweiten höheren Temperatur, wodurch das Material in eine fließfähige Konsistenz übergeht;
- Umformen des Materialstrangs in ein dünnes Band;
- Abkühlen des Bands, sodass es zu einer steifen Platte erstarrt.

## Beschreibung

Die Erfindung betrifft ein Verfahren zur Herstellung einer Recyclat-Platte aus Restabfall, der beim Recyceln von Verpackungen anfällt und im Wesentlichen aus einem Verbund aus thermoplastischem Kunststoff und Aluminiumfolie besteht.

Bei den Verpackungen, die soweit wie möglich wiederverwendet werden sollen, handelt es sich vorzugsweise um Getränkekartons, wie sie insbesondere zur Verpackung von Milch und Säften in großem Umfang verwendet werden. Da solche Getränkekartons neben Papier auch Verbund-Folien aus thermoplastischem Kunststoff und Aluminium enthalten, ist deren stoffliche Verwertung besonders anspruchsvoll.

Die in solchen leeren Getränkekartons enthaltenen Papierfasern lassen sich relativ einfach von den übrigen Bestandteilen trennen, um sie erneut in den stofflichen Kreislauf einzuführen, beispielsweise für die Herstellung von Wellpappe. Wesentlich schwieriger ist es, die verbleibenden Restabfall-Fraktionen zu recyceln. Diese sogenannten Rejekte bestehen im Wesentlichen aus einem nahezu untrennbaren Verbund von thermoplastischem Kunststoff und Aluminiumfolie. Eine Auflösung dieses Verbunds mit anschließender Rückgewinnung der einzelnen Komponenten, also Kunststoff und Aluminium, wäre nur in einem technisch sehr aufwendigen Prozess möglich, welcher nicht wirtschaftlich durchgeführt werden könnte. Daher werden diese Restabfälle bzw. Rejekte sehr oft einfach als Ganzes als Zuschlagstoff eingesetzt, beispielsweise bei der Zementherstellung oder als Zusatzbrennstoff. Eine weitere Verwendungsmöglichkeit besteht darin, die Restabfälle in kleine Schnipsel zu zerkleinern, um sie anschließend zu waschen, zu trocknen und heiß zu Platten oder flächigen Formstücken zu verpressen. Die so gewonnenen Platten können zu Böden, Möbeln oder anderen, kleineren und größeren Gebrauchsgegenständen weiterverarbeitet werden. Die Qualität der auf diese einfache Weise hergestellten Platten und der daraus hergestellten Produkte ist jedoch sehr beschränkt.

EP 0 493 720 A2 beschreibt ein Verfahren zu Wiederaufbereitung von gebrauchten Getränkekartons aus zweiseitig kunststoffbeschichtetem Material. Der Getränkekarton wird zuerst zerkleinert. Die kleinen Flächenstücke werden anschließend in wässriger Suspension aufgelöst, wobei sich die Thermoplastteile von dem Trägermaterial weitgehend abtrennen. Es folgt das Trennen der Suspension aus Thermoplastteilen und Faserstoffen in zwei Fraktionen, nämlich in eine erste Fraktion von Faserstoffen und eine zweite Fraktion von im Wesentlichen Thermoplastteilen. Die zweite Fraktion aus Thermoplastteilen wird anschließend entwässert und kann unmittelbar einer Weiterverarbeitung, zum Beispiel in ein Thermoplast-Granulat, zugeführt werden. Enthält die zweite Fraktion Teile, die außer dem Thermoplast noch eine Aluminiumeinlage aufweisen, können diese von den im Wesentlichen reinen Thermoplastteilchen in eine spezielle dritte Fraktion von aluminiumhaltigen Thermoplastteilchen getrennt werden.

EP 2 463 071 A1 beschreibt ein Verfahren zur Aufbereitung von Abfällen aus Tetra Pak-Behältern, die 18 Prozent Aluminium enthalten. Nach Zerkleinerung und Reinigung werden die Abfallstücke entweder durch Extrusion oder durch Agglomeration in Granulat überführt. Das so gewonnenen Granulat kann dann zusammen mit additiven Komponenten in einem Injektions-Kompressions-Prozess zu Plastikteilen weiterverarbeitet werden.

EP 1 776 006 A1 beschreibt die Herstellung eines Kunststoff-Formteils aus recyceltem Rejekt-Material, das einen Aluminium-Anteil von 15 bis 20 Prozent hat. Das Rejekt-Material liegt in geschredderter oder granulierter Form vor und kann durch Extrudieren oder Spritzgießen weiterverarbeitet werden.

Das im Internet gefundene Dokument "PALLMANN Kunststoff agglomerieren" beschreibt die Verarbeitung von Thermoplast-Produktionsabfällen sowie von Verbundmaterialien in einem Agglomerator zu rieselfähigem Granulat. Das zu recyclierende Material wird mit einer Zuführschnecke in eine Agglomerierkammer gefördert und dort durch Friktionswärme und unter Druck agglomeriert. Das agglomerierte Material wird durch eine Lochmatrize ausgepresst. Das durch die Matrize austretende Material wird von umlaufenden Messern in Stücke geschnitten, und diese Stücke werden dann mit der Kühlluft eines Ventilators direkt vom Agglomerator in einen Heiß-Granulator gefördert, in dem die Zerkleinerung zu einem Granulat erfolgt.

EP 2 942 173 A1 beschreibt ein Verfahren zur Herstellung von Granulat zum Spritzgießen sowie ein Verfahren zur Herstellung eines Formteils aus dem gewonnenen Granulat. Restabfall, der beim Recyceln von Verpackungen aus Verbundmaterial, insbesondere Getränkekartons, anfällt und im Wesentlichen aus einem Verbund von thermoplastischem Kunststoff und Aluminiumfolie besteht, wird zu Restabfall-Schnipseln zerkleinert. Sodann werden diese Restabfall-Schnipsel zu einem zusammenhängenden Materialstrang agglomeriert, wobei der in den Restabfall-Schnipsel enthaltene thermoplastische Kunststoff teilweise verflüssigt wird. Der heiße Materialstrang, welcher teigähnliche Konsistenz aufweist, wird im nächsten Schritt in kurze Strangabschnitte mit einer Länge von 1 bis 5 cm zerschnitten. Die einzelnen Strangabschnitte werden in einem Wasserbad und durch strömende Luft abgekühlt, sodass sie erhärten, und dann sofort zu einem Granulat mit einer Korngröße von 6 bis 10 mm zerkleinert. Aus dem so gewonnenen Granulat lassen sich Formteile durch Spritzgießen herstellen.

Die Zerteilung des agglomerierten heißen Materialstrangs in kurze Strangabschnitte hat Nachteile. Das recycelte Material, aus dem die Strangabschnitte bestehen, hat eine relativ inhomogene Struktur, hat im Bereich des Schnittes die Tendenz, Fäden zu ziehen, weil das Material nicht sehr gut abgekühlt ist, und enthält grobkörnige Verunreinigungen. Dies erschwert die Weiterverarbeitung zu einem hochwertigen Recyclat. Bei der Granulierung kommt es zu Staubentwicklung, das Granulat enthält Fäden.

Aufgabe der vorliegenden Erfindung ist die Bereitstellung eines Verfahrens zur Herstellung einer hochwertigen Recyclat-Platte aus Restabfall, der im Wesentlichen aus einem Verbund von thermoplastischem Kunststoff und Aluminiumfolie besteht, in einem kontinuierlichen Prozess.

Gelöst wird die Aufgabe durch die aufeinanderfolgenden Verfahrensschritte, die im Patentanspruch 1 angegeben sind.

Im ersten Schritt wird der aus thermoplastischem Kunststoff und Aluminium bestehende Restabfall - in an sich bekannter Weise - zu kleinen Schnipseln zerkleinert. Dadurch werden die ungleichmäßig großen Abfallstücke auf eine definierte Größe gebracht.

Im zweiten, für sich genommen ebenfalls bekannten Verfahrensschritt werden die Restabfall-Schnipsel zu einem zusammenhängenden Materialstrang agglomeriert. Durch die dabei entstehende Wärme wird der in den Restabfall-Schnipseln enthaltenen thermoplastische Kunststoff teilweise verflüssigt, sodass der agglomerierte Materialstrang eine teigähnliche Konsistenz erhält.

Im nächsten Schritt wird der heiße Materialstrang entgast. Dadurch reduziert sich der Feuchtigkeitsgehalt.

Der heiße entfeuchtete Materialstrang wird sodann extrudiert, wobei der thermoplastische Kunststoff weiter aufgeschmolzen wird und der Materialstrang in eine fließfähige Konsistenz mit deutlich niedrigerer Viskosität übergeht.

Wichtig ist die Temperaturdifferenz. Während das Agglomerieren der Restabfall-Schnipsel bei einer Temperatur zwischen 130 und 180 Grad Celsius stattfindet, erfolgt das anschließende Extrudieren bei deutlich höherer Temperatur, nämlich zwischen 150 und 220 Grad Celsius. Auf diese Weise wird der Materialstrang für den nächsten Verarbeitungsschritt vorbereitet.

Der durch Extrudieren fließfähig gewordene Materialstrang wird durch eine Breitschlitzdüse gedrückt und in ein dünnes kontinuierliches Band umgeformt. Dadurch erhält der teilweise aufgeschmolzene Materialstrang eine große Oberfläche im Verhältnis zum Volumen. Bei einer Breite von 700 bis 900, vorzugsweise 850 mm, hat dieses Band vorzugsweise eine Dicke zwischen 8 und 10 mm, besonders bevorzugt zwischen 5 und 8 mm.

Im letzten Schritt des erfindungsmäßen Verfahrens wird das kontinuierliche Band durch einen Kühlkalander geführt. Dabei kühlt das Band ab und erstarrt zu einer steifen Platte, die schnell Umgebungstemperatur annimmt.

Die so erzeugte Recyclat-Platte zeichnet sich durch eine sehr homogene Materialstruktur aus. Insbesondere sind die beiden Hauptbestandteile des Ausgangsmaterials, also thermoplastischer Kunststoff und Aluminiumfolie, sowohl über die Breite als auch die Dicke der Platte optimal verteilt. Die durch das erfindungsgemäße Verfahren hergestellte Recyclat-Platte stellt ein hochwertiges End- oder Zwischenprodukt für die kunststoffverarbeitende Industrie dar.

In vorteilhafter Weiterbildung des erfindungsgemäßen Verfahrens wird der zunächst agglomerierte und dann extrudierte Materialstrang durch ein Filter gedrückt, bevor er zu einem kontinuierlichen Band umgeformt wird. Dies dient dem Herausfiltern von größeren Partikeln und Verunreinigungen, sodass die Qualität des Recyclats weiter gesteigert werden kann. Vorteilhaft wird der Materialstrang durch ein Sieb mit einer Maschenweite von 200 bis 800 µm, bevorzugt 300 bis 500 µm gedrückt.

Optional lässt sich die erfindungsgemäß hergestellte Platte nach dem Abkühlen in kleine Tafeln schneiden, vorzugsweise mit einer Kantenlänge zwischen 5 und 10 cm. Diese relativ kleinen Tafeln lassen sich entweder gut zwischenlagern oder auch direkt weiterverarbeiten, beispielsweise zu Granulat zur Herstellung von Kunststoff-Formteilen. Es hat sich gezeigt, dass das zu einem relativ dünnen Band geformte und dann schnell zu einer festen Platte erstarrte Material besser granuliert werden kann, insbesondere ohne exzessive Staubentwicklung und Fadenbildung, als von einem erstarrten kompakten Materialstrang abgeschnittene Recyclat-Stücke.

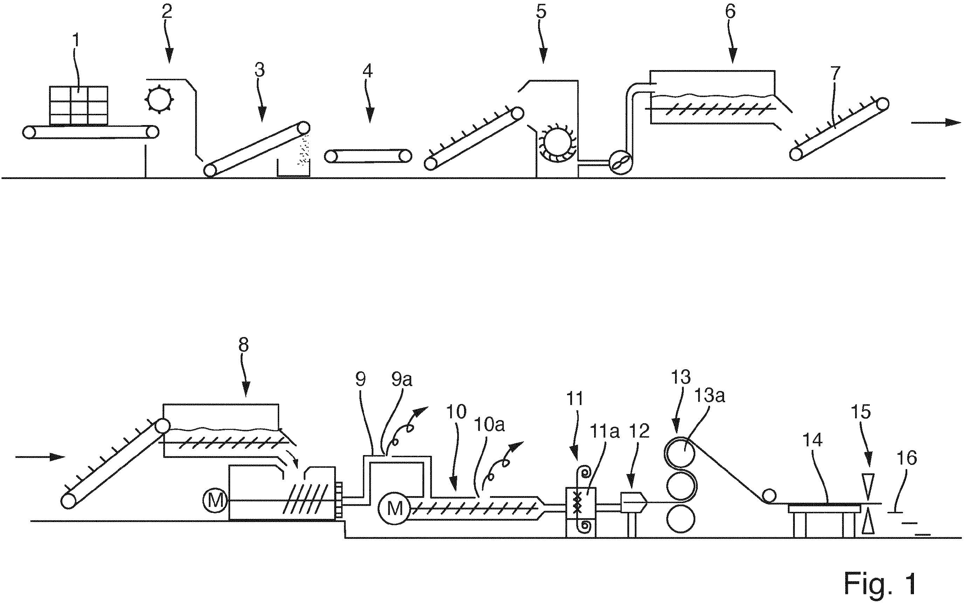

Ein Ausführungsbeispiel des erfindungsgemäßen Verfahrens wird nachstehend unter Bezugnahme auf die beigefügte Abbildung näher beschrieben.

Die einzige Figur veranschaulicht schematisch ein Verfahren zur Herstellung einer Recyclat-Platte aus Restabfall, der beim Recyceln von Getränkekartons anfällt.

Die Restabfälle werden in Form von Ballen 1 angeliefert und bestehen im Wesentlichen aus einem Verbund von thermoplastischem Kunststoff und Aluminiumfolie. Die Ballen 1 werden mithilfe eines Ballenöffners 2 geöffnet.

In einem Eisen-Metallabscheider 3 werden Eisenpartikel aus den Restabfällen abgeschieden. In einem Nichteisen-Metallabscheider 4 werden kompakte Artikel aus Nichteisen-Metallen wie insbesondere Kupfer, Messing und Aluminium, abgeschieden. Verbundmaterial, bei dem die Aluminiumfolie fest mit dem thermoplastischen Kunststoff verbunden ist, passiert sowohl den Eisen-Metallabscheider 3 als auch den Nichteisen-Metallabscheider 4 ungehindert, werden also absichtlich nicht ausgesondert, weil sie ja in der herzustellen Recyclat-Platte enthalten sein sollen.

Im nächsten Verfahrensschritt wird der Restabfall mithilfe eines Schredders 5 zu Schnipseln mit einer Größe von 10 bis 15 mm zerkleinert. Dadurch wird der ungleichmäßig groß gestückelte Restabfall homogenisiert und auf eine einheitliche Größe gebracht. Dabei ist die Größe der Schnipsel so gewählt, dass sie für die Bearbeitung in den Folgeprozessen optimal ist.

Im folgenden Verfahrensschritt werden die Restabfall-Schnipsel in einen Zwischenspeicher 6 gespeichert und anschließend in einem kontinuierlichen Stoffstrom über ein Förderband 7 den weiteren Folgeprozessen zugeführt. Der Zwischenspeicher 6 dient also als Puffer, um die unterschiedlichen Verarbeitungszeiten in den einzelnen Bearbeitungsstationen auszugleichen.

Im nächsten Schritt werden die Restabfall-Schnipsel in einem Agglomerator 8 zu einem zusammenhängenden Materialstrang agglomeriert. Hierzu wird das Material im Agglomerator 8 durch zwei gegenläufig drehende Schnecken komprimiert. Dabei entstehen Druck- und Reibungseffekte, welche das Material auf eine Temperatur von ungefähr 155 Grad Celsius erwärmt. Bei dieser Temperatur wird der thermoplastische Kunststoff zumindest an seiner Oberfläche teilweise aufgeschmolzen und geht in einen plastischen, teigähnlichen bis zähflüssigen Zustand über. Die Restabfall-Schnipsel verschmelzen so zu einem endlosen Materialstrang. Der plastische bzw. zähflüssige Materialstrang tritt durch eine Lochplatte aus dem Agglomerator 8 aus. Eine thermische Zersetzung des thermoplastischen Kunststoffs findet bei der gewählten Temperatur nicht statt.

Im folgenden Schritt wird der agglomerierte Materialstrang über eine Verbindungsleitung 9 mit Entgasungsöffnung 9a zu einem Extruder 10 gedrückt. Die in den agglomerierten Restabfall-Stücken noch vorhandene Restfeuchte verdampft dabei zum größten Teil durch die Entgasungsöffnung 9a. Beim Eintritt in den nachfolgenden Extruder 10 hat der Materialstrang noch einen Restfeuchtegehalt von maximal 10 Prozent, eher nur noch von 2 bis 4 Prozent.

Die in dem Extruder 10 enthaltene Schnecke komprimiert und erhitzt den entgasten Materialstrang weiter, nämlich bis auf eine Temperatur von ungefähr 180 Grad Celsius. Dabei wird der thermoplastische Kunststoff weiter aufgeschmolzen, sodass das Material fließfähig wird und in eine vergleichsweise niedrigviskose Konsistenz übergeht. Auch der Extruder 10 hat eine Entgasungsöffnung 10a, durch welche beim Extrudieren entstehender Wasserdampf entweichen kann. Dadurch reduziert sich der Restfeuchtegehalt auf nahezu null Prozent.

Hinter dem Extruder 10 steht ein Filter 11 mit einem Sieb 11a, dessen Maschenweite ungefähr 400 Mikrometer beträgt. Das Filter 11 siebt kontinuierlich unerwünschte Verunreinigungen aus dem Materialstrom heraus; größere Partikel werden ausgefiltert.

Der zähflüssige, homogenisierte und gefilterte Materialstrang wird im nächsten Schritt durch eine Breitschlitzdüse 12 gedrückt. Dadurch wird der kompakte Materialstrang in ein dünnes kontinuierliches Band umgeformt. Dieses Band hat beispielhaft eine Dicke von ungefähr 6 mm und eine Breite von ca. 800 mm.

Das von der Breitschlitzdüse 12 kontinuierlich ausgegebene Band wird über einen Kühlkalander 13 geführt. Der Kühlkalander 13 hat mehrere, aktiv gekühlte Walzen 13a, die hier beispielhaft vertikal übereinander angeordnet sind. Das zu kühlende Band umschlingt diese Walzen 13a teilweise. Aufgrund der starken Abkühlung beim Kontakt mit den Kühlwalzen 13a erstarrt das kontinuierliche Band zu einer steifen Platte, die sich auf die Oberseite eines Tisches 14 aufschiebt.

Zum Schluss wird der kontinuierliche Prozess beendet, indem die auf den Tisch 14 geschobene, im Prinzip endlose Platte von einer Schneidvorrichtung 15 in quadratische oder rechteckige Platten, kurze Streifen oder Tafeln 16 geschnitten wird. Solche kleinen Tafeln 16 mit einer Kantenlänge zwischen 5 und 10 cm können besser gelagert, verpackt und weiterverarbeitet werden als eine große Platte. Die erzeugten Tafeln können später optional weiter zerkleinert und zu einem Granulat weiterverarbeitet werden. Die gemäß dem vorstehend beschriebenen Verfahren aus Restabfall erzeugte Recyclat-Platte lässt sich aber auch direkt als Endprodukt einsetzen, beispielsweise als Bodenbelag.

### Bezugszeichen

- 1: Ballen
- 2: Ballenöffner
- 3: Eisen-Metallabscheider
- 4: Nichteisen-Metallabscheider
- 5: Schredder
- 6: Zwischenspeicher
- 7: Förderband
- 8: Agglomerator
- 9: Verbindungsleitung
- 9a: Entgasungsöffnung (von 9)
- 10: Extruder
- 10a: Entgasungsöffnung (von 10)
- 11: Filter
- 11a: Sieb (von 11)
- 12: Breitschlitzdüse
- 13: Kühlkalander
- 13a: Walzen (von 13)
- 14: Tisch
- 15: Schneidvorrichtung
- 16: Tafeln

## Patentansprüche

1. Verfahren zur Herstellung einer Recyclat-Platte aus Restabfall, der beim Recyceln von Verpackungen anfällt und im Wesentlichen aus einem Verbund aus thermoplastischem Kunststoff und Aluminiumfolie besteht, mit den aufeinanderfolgenden Verfahrensschritten:
Zerkleinern des Restabfalls zu Schnipseln mit einer Größe von 5 bis 20 mm;
Agglomerieren der Restabfall-Schnipsel bei einer ersten Temperatur zwischen 130 und 180 Grad Celsius zu einem zusammenhängenden Materialstrang, wobei der thermoplastische Kunststoff in den Restabfall-Schnipseln teilweise verflüssigt wird und dadurch der Materialstrang eine teigähnliche Konsistenz erhält;
Entgasen des heißen Materialstrangs;
Extrudieren des entgasten Materialstrangs bei einer zweiten höheren Temperatur zwischen 150 und 220 Grad Celsius, wobei der thermoplastische Kunststoff weiter aufgeschmolzen wird und das Material in eine fließfähige Konsistenz übergeht;
Drücken des fließfähigen Materialstrangs durch eine Breitschlitzdüse (12), sodass ein dünnes kontinuierliches Band geformt wird;
Führen des kontinuierlichen Bands durch einen Kühlkalander (13), wodurch das Band abkühlt und zu einer steifen Platte erstarrt.

2. Verfahren nach Anspruch 1, **dadurch gekennzeichnet, dass** das Agglomerieren der Restabfall-Schnipsel bei einer Temperatur zwischen 150 und 170 Grad Celsius erfolgt.

3. Verfahren nach Anspruch 2, **dadurch gekennzeichnet, dass** das anschließende Extrudieren bei einer Temperatur zwischen 170 und 190 Grad Celsius erfolgt.

4. Verfahren nach einem der vorhergehenden Ansprüche, **dadurch gekennzeichnet, dass** der agglomerierte Materialstrang über eine Verbindungsleitung (9) mit Entgasungsöffnung (9a) zu einem Extruder (10) gefördert wird.

5. Verfahren nach einem der vorhergehenden Ansprüche, **dadurch gekennzeichnet, dass** das von der Breitschlitzdüse (12) geformte Band eine Dicke von 3 bis 10 mm hat, vorzugsweise zwischen 5 und 8 mm.

6. Verfahren nach einem der vorhergehenden Ansprüche, **dadurch gekennzeichnet, dass** der extrudierte Materialstrang vor dem Umformen zum Band durch ein Filter (11) gedrückt wird, um Partikel und Verunreinigungen herauszufiltern.

7. Verfahren nach Anspruch 6, **dadurch gekennzeichnet, dass** der Materialstrang durch ein Sieb (11a) mit einer Maschenweite von 200 bis 800 Mikrometern, vorzugsweise 300 bis 500 Mikrometern gedrückt wird.

8. Verfahren nach einem der vorhergehenden Ansprüche, **dadurch gekennzeichnet, dass** die erstarrte Platte auf eine Temperatur zwischen 20 und 30 Grad Celsius abgekühlt wird.

9. Verfahren nach einem der vorhergehenden Ansprüche, **dadurch gekennzeichnet, dass** die abgekühlte Platte eine Dicke von 3 bis 10 mm, vorzugsweise 5 bis 7 mm hat.

10. Verfahren nach einem der vorhergehenden Ansprüche, **dadurch gekennzeichnet, dass** die Platte nach dem Abkühlen in Tafeln (16) mit einer Kantenlänge zwischen 5 und 10 cm geschnitten wird.
